# EUROPEAN PATENT APPLICATION

(11) **EP 0 573 242 A1**
(43) Date of publication of application: **08.12.1993**
(21) Application number: 93304217.8
(22) Date of filing: 01.06.1993
(51) Int. Cl.: F03B 13/26

(54) **Utilisation of tidal water for generating electricity**

(30) Priority: 03.06.1992 GB 9211739
(71) Applicant: Davies, Robert Hugh, Bodelwylddan, Ryl,Glwyd., LL18 5SR (GB)
(72) Inventor: Davies, Robert Hugh, Bodelwylddan, Ryl,Glwyd., LL18 5SR (GB)
(74) Representative: Lyons, Andrew John

(57) **Abstract**

A system for utilising tidal water for generating electrical power comprises first water storage means (E,F,G,H) for receiving tidal water and second water storage means (P) for receiving stored water from the first water storage means, the second water storage means having means for allowing escape of said received water, wherein turbines (T) are located to be driven by movement of water between and/or from said storage means.

## Description

This invention concerns utilisation of tidal water for generating electricity.

Various proposals have been made for using tidal water for power generation, electricity generation is not continuous.

An object of this invention is to provide a system for utilising tidal water for generating electricity, which system may allow for continuous power generation.

According to this invention there is provided a system for utilising tidal water for generating electrical power, which system comprises first water storage means for receiving tidal water and second water storage means for receiving stored water from the first water storage means, the second water storage means having means for allowing escape of said received water, wherein turbines are located to be driven by movement of water between and/or from said storage means.

The first storage means preferably comprises a plurality of storage reservoirs and especially comprises two or more series of storage reservoirs, one of a first series being arranged to transfer water to one of a second series when empty.

Preferably the second water storage means comprises a plurality of pipes for receiving water from the first water storage means. Preferably the size or number of the pipes is sufficient to contain all water from all of said first storage means communicating therewith directly or indirectly.

By providing a suitable number of size and storage means and a suitable sequence of emptying water from one to another relative to tidal flow a substantially continuous flow of water may be maintained so that at least one turbine is operating at any one time to generate electricity.

In one preferred embodiment there is provided a system for utilising tidal flow for generating electrical power comprises two series of open reservoirs arranged one behind the other, the front series of reservoirs communicating with a plurality of pipes therefrom and each one of the rear series of reservoirs communicating with one of the front series of reservoirs whereby by placing turbines between the communicating front and rear reservoirs, between the front reservoirs and their outflow pipes and at the outflow ends of the pipes and provided that the system is situated so that tidal water can flow over the system into both series of reservoirs, stored water can be arranged to flow from a rear reservoir to a front reservoir, from a front reservoir to a pipe and out from a pipe selectively past a turbine to provide substantially continuous electrical power generation.

This invention will now be further described, by way of example only, with reference to the accompanying drawings, in which:

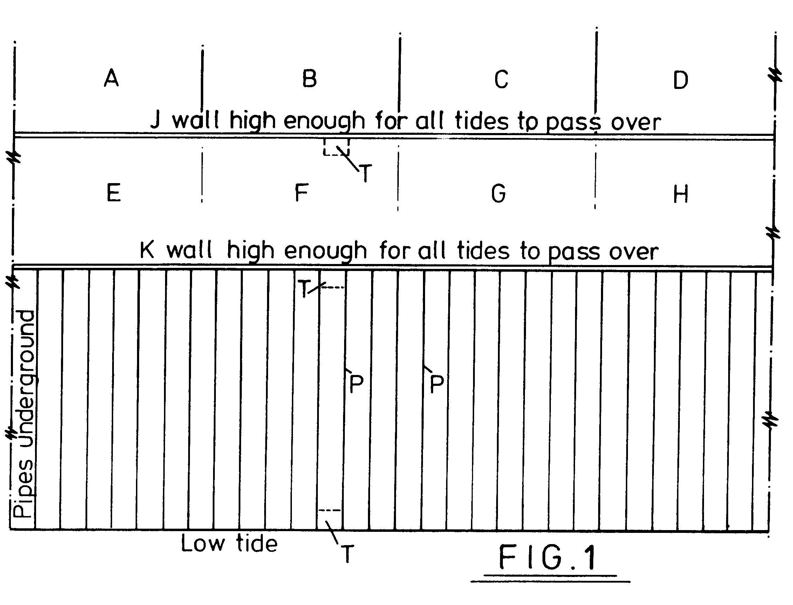

Figure 1 shows schematically an electrical power generating system utilising tidal water; and

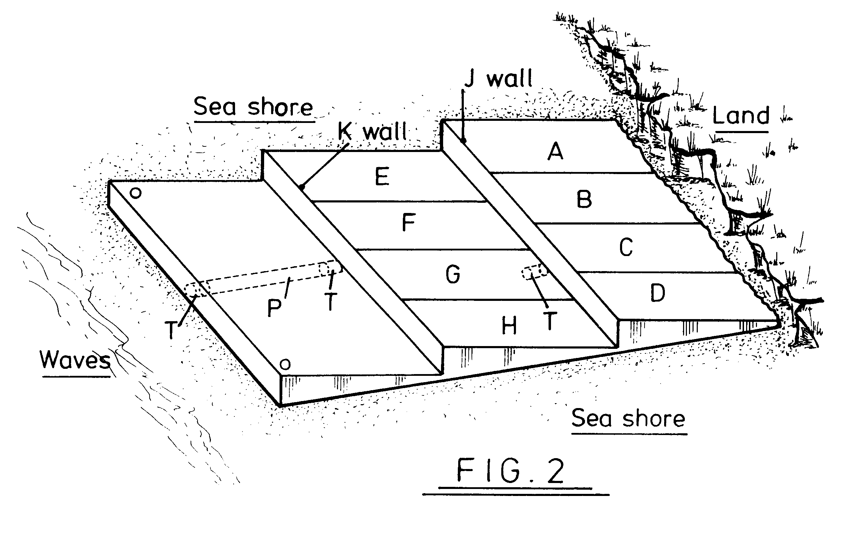

Figure 2 is a schematic perspective view of the system of Figure 1.

In the drawings there are shown two series of reservoirs, a front series E, F, G and H and a rear series A, B, C and D higher than the front series. Reservoir A communicates with reservoir E, reservoir B with reservoir F and so on. The series of reservoirs are separated by a wall J which is low enough for all tides to pass over. Wall K at the front of reservoirs E, F, G and H is also low enough for all tides to pass over.

Communicating with reservoirs E, F, G and H are a series of pipes P arranged underground and sloping downwards towards the sea. The pipes P slightly higher than the highest low tide mark for 'water space' when pipes or underground space valves are open.

Each reservoir and each pipe has its outlet valved so that it can be selectively opened and closed.

Where reservoirs A, B, C and D communicate with reservoirs E, F, G and H, respectively are positioned turbines T, where reservoir E, F, G and H communicate with pipes P are also positioned turbines T and at the outflow end of each pipe P or of a group of pipes is a turbine T, whereby water flow through any turbine can cause electricity to be generated.

Immediately before the tide starts to return from its highest point, the valves of all the reservoirs A, B, C and D are closed to keep these reservoirs full of water until required later and the reservoirs E and F start to empty consecutively to the underground pipes or spaces P below wall K. The reservoirs E and F then remain empty and their valves are closed as soon as the tide has returned over the wall K towards its lowest point.

Immediately before reservoirs E and F become empty and their valves closed, the reservoirs G and H commence to empty consecutively to the underground pipes or spaces P below wall K. This enables the flow of water from the highest point in reservoirs A, B, C and D to this place without a stop. As the reservoirs G and H are emptying consecutively into underground pipes, the tide travels down and returns over the underground pipes towards its lowest point on the shore. When H reservoir is about to empty completely, the tide should have just gone beyond the bottom end of the underground pipes and immediately some of the valves at the bottom end of the underground pipes should open to let out the water from the underground pipes to continue the flow of water. It is vital here that enough space has been prepared between end of the underground pipes and the slowly ebbing tide to provide the space to accommodate the first batch of water coming out from the underground pipes. By now the reservoirs G and H are empty and their valves are closed. When planning the project, setting underground the pipes and/or concrete spaces, it is essential to calculate enough space between the underground pipes etc bottom ends and the highest of the low tidal points to allow space for the total amount of water already emptied into the underground pipes from the reservoirs beyond the wall K, before the incoming tide returns to cover the underground pipes. It must be noted that the lowest tidal point varies with time and other factors. So it is imperative to find the highest of these low tidal points before starting to build the project and setting the pipes or constructing spaces underground.

Immediately before all underground pipes have emptied and the valves at the bottom end of the underground pipes have closed, the reservoirs A, B, C and D consecutively start to empty to reservoirs E, F, G and H ie, A to E, B to F, C to G and D to H. Immediately before reservoir D fully empties to reservoir H and the incoming tide starts to pass over the wall K, the reservoirs E, F, G and H consecutively empty to the underground pipes below wall K until the incoming tide reaches the highest point in reservoir A, B, C and D. Then the process carries on as per described in succession for the endless and continuous flow of sea water. Enough turbines should be used to convert the flow of all of the water from reservoir to reservoir, from reservoir to pipes and from pipes to sea to create energy without wastage. The turbines are placed at the optimum places.

The walls supporting the reservoirs must allow the lowest high tide to pass over, in order to fill the reservoirs. It must be noted that reservoirs E, F, G and H empty this water into underground pipes below wall K when the incoming tide travels over the underground pipes to the highest point in reservoirs A, B, C and D and therefore there is no outlet for the water in the underground pipes until later on, again when the tide ebbs and returns to sea from its highest point in reservoirs A, B, C and D, the reservoirs E, F, G and H consecutively empty this water again to the underground pipes. Therefore its underground pipes or spaces must have at least twice the volume of the water in all reservoirs E, F, G and H together and some more to cover the time when the tide reaches its highest point. Possibly the pipes from reservoirs E and F will need even greater volume, as they may be emptying as the tide is returning to fill them. Thus the relative volume of each reservoir and underground pipes or spaces should be calculated in conjunction with each other in order that the flow of water can continue without any stoppage. The form and/or place of each reservoir and even all underground pipes or spaces cannot always be applied according to the above design. The project must be fitted into the physical features of the land or terrain and the project may have to be divided but the net results should work according to the principles outlined above. The reservoir walls or dams and nearby land should harmonise with the environment and the upright outside of the walls should simulate natural rocks. The top of the walls in the outskirts should not be even in level but covered with mounds of rough rock to look like nature so that the project would seem as lakes etc formed by nature as far as possible The reservoirs should never be dry but covered with mud to encourage worms for wild life. The worms would have time to breed as the bottom of the reservoirs would only be shallow for a short time every day. This would create a natural habitat and at the same time protect the land for sea erosion. The surroundings could easily be made very pleasant with special trees and plants.

Excess electricity during the day and especially during the night can be used to pump water from a low level to a much higher level to form a reservoir among the hills and mountains inland where land is unfit for cultivation etc. The reservoir can be built in a country without a sea coast and obtains excess electricity from a country with a sea coast. Only enough land to cover a working project must be used to avoid land wastage or to allow more projects being built. Less coal, gas etc would be used and this would bring down pollution to a minimum and the fuel, coal etc could be used to produce drugs etc and these resources would be available for many generations to come. Also it may be possible to pump water into arid land and deserts to create agriculture land and also forests which would eventually bring rain. It may also be possible in the near future to carry excess electricity for thousands of miles. Owing to a very rough terrain near the sea shore and a higher tide it may be possible that reservoirs should follow each other in a longer sequence so that the same water could be used many times over before returning to the sea. The number of reservoirs would vary.

In addition to build this project on the sea shore, this project can be extended to flat land adjoining the sea shore if land is scarce or more land is required to complete the project provided the land is not too high above the high tide. Large pipes or construction of spaces in concrete are sunk in the ground to the required depth to accommodate enough high tide water to form underground reservoirs. The land is excavated piece by piece to form a trench wide and deep enough for large pipes or to construct long spaced form of concrete. The soil is replaced on top and the excavation continues along the field until the required area is constructed. The pipes or concrete spaces end in the sea shore. These must have sufficient depth of soil on top of the pipes and concrete spaces so that the land can be normally farmed like any other farm ie. animal breeding, cultivation etc. This would provide plenty of sites to generate electricity in all lowland countries near the sea coast. It would provide cheap electricity for most of the world and the balance of the atmosphere properties would eventually become normal That is air pollution would not exist and rain water would be purer.

## Claims

1. A system for utilising tidal water for generating electrical power, which system comprises first water storage means for receiving tidal water and second water storage means for receiving stored water from the first water storage means, the second water storage means having means for allowing escape of said received water, wherein turbines are located to be driven by movement of water between and/or from said storage means.

2. A system as claimed in claim 1, wherein the first storage means comprises a plurality of storage reservoirs.

3. A system as claimed in claim 2, wherein the first storage means comprises two or more series of storage reservoirs, one of a first series being arranged to transfer water to one of a second series when empty.

4. A system as claimed in claim 1, 2 or 3, wherein the second water storage means comprises a plurality of pipes for receiving water from the first water storage means.

5. A system as claimed in claim 4, wherein the size or number of the pipes is sufficient to contain all water from all of said first storage means communicating therewith directly or indirectly.

6. A system for utilising tidal flow for generating electrical power comprises two series of open reservoirs arranged one behind the other, the front series of reservoirs communicating with a plurality of pipes therefrom and each one of the rear series of reservoirs communicating with one of the front series of reservoirs whereby by placing turbines between the communicating front and rear reservoirs, between the front reservoirs and their outflow pipes and at the outflow ends of the pipes and provided that the system is situated so that tidal water can flow over the system into both series of reservoirs, stored water can be arranged to flow from a rear reservoir to a front reservoir, from a front reservoir to a pipe and out from a pipe selectively past a turbine to provide substantially continuous electrical power generation.
